# EUROPÄISCHE PATENTSCHRIFT

(11) **EP 1 377 480 B1**
(45) Veröffentlichungstag und Bekanntmachung des Hinweises auf die Patenterteilung: **23.01.2008**
(21) Anmeldenummer: 02735227.7
(22) Anmeldetag: 05.04.2002
(51) Int. Cl.: B60N 2/235

(54) **BAUGRUPPE FÜR EINEN FAHRZEUGSITZ, INSBESONDERE BESCHLAG**
SUBASSEMBLY FOR A VEHICLE SEAT, IN PARTICULAR A FITTING
ENSEMBLE POUR SI GE DE V HICULE, NOTAMMENT ARMATURE DE SI GE

(30) Priorität: 12.04.2001 DE 10118358
(43) Veröffentlichungstag der Anmeldung: 07.01.2004
(73) Patentinhaber: KEIPER GmbH & Co. KG, 67657 Kaiserslautern (DE)
(72) Erfinder: POLLACK, Paul, 55583 Bad Münster/Eberburg (DE)
(74) Vertreter: Patentanwälte Hosenthien-Held und Dr. Held
(86) Internationale Anmeldenummer: PCT/EP2002/003790
(87) Internationale Veröffentlichungsnummer: WO 2002/083451

(56) Entgegenhaltungen:
- EP-A- 0 720 930
- WO-A-00/44582
- DD-A- 258 248
- DD-A- 298 826
- GB-A- 2 156 901

## Beschreibung

Die Erfindung betrifft eine Baugruppe für einen Fahrzeugsitz, insbesondere einen Beschlag für einen Kraftfahrzeugsitz, mit den Merkmalen des Oberbegriffs des Anspruches 1.

Aus der WO 00/44582 ist eine als Beschlag ausgebildete Baugruppe dieser Art bekannt, welcher als Neigungseinsteller für die Rückenlehne eines Fahrzeugsitzes vorgesehen ist. Häufige Änderungen der Neigung der Rückenlehne führen langfristig zu einem gewissen Verschleiß.

Aus der EP 0720930 ist eine weitere Baugruppe dieser Art bekannt, wobei das Riegelelement der zweiten Bauteils gehärtet ist um bei einem Unfall eine Verformung des ersten Bauteils zu erreichen.

Der Erfindung liegt die Aufgabe zu runde, eine Baugruppe der eingangs genannten Art hinsichtlich ihres Verschleißes zu verbessern. Diese Aufgabe wird erfindungsgemäß durch eine Baugruppe mit den Merkmalen des Anspruches 1 gelöst. Vorteilhafte Ausgestaltungen sind Gegenstand der Unteransprüche.

Dadurch, daß das erste Bauteil (und vorzugsweise auch das zweite Bauteil) wenigstens teilweise gehärtet ist, kann das Verschleißverhalten deutlich verbessert und durch die Steigerung der Dauerfestigkeit die Lebensdauer der Baugruppe deutlich erhöht werden. Ein vorhandenes Spiel vergrößert sich nicht, so daß Fehlfunktionen des Beschlags vermieden werden. Außerdem ist in den gehärteten Bereichen eine höhere Flächenpressung möglich, was den Einsatzbereich des erfindungsgemäßen Beschlags vergrößert.

Um den erhöhten Herstellungsaufwand kostenmäßig gering zu halten und das statische und dynamische Verhalten der Bauteile nicht allzu sehr zu ändern, ist das erste Bauteil vorzugsweise nur in denjenigen Bereichen, welche mit relativ zum ersten Bauteil beweglichen Bauteilen des Beschlags zusammenwirken, beispielsweise dem Lager und/oder der Führung und/oder anderen Abstützungen, und insbesondere vorzugsweise nur lokal, d.h. an den Lager-, Führungs-, Zahn- und sonstigen Stützflächen, gehärtet und im übrigen ungehärtet. Die Reduktion des Verschleißes beeinflußt die geometrische Güte dieser Stützflächen nicht.

In einer besonders bevorzugten Ausführungsform sind die gehärteten Bereiche mittels eines Lasers gezielt randschichtgehärtet. Dieses Verfahren hat gegenüber einem Einsatzhärten oder Induktionshärten den Vorteil, daß eine bessere Maßhaltigkeit erzielt werden kann, daß eine gezielte Härtung mit definierter Härtezonengeometrie in bestimmten Bereichen erfolgen kann und daß nur ein geringer Verzug des Bauteils nach dem Abkühlen eintritt. Das Bauteil kann aufgrund des verfahrensbedingten, niedrigen Wärmeeintrags nach dem Härteprozeß direkt weiterverarbeitet werden. Es ist kein Abschreckmedium erforderlich, da eine Selbstabschreckung stattfindet, d.h. die eingebrachte Wärme wird überwiegend durch Wärmeleitung in das kalte Grundmaterial abgeführt. Außerdem ist ein kostengünstigerer Einsatz innerhalb einer vollautomatischen Montageanlage möglich.

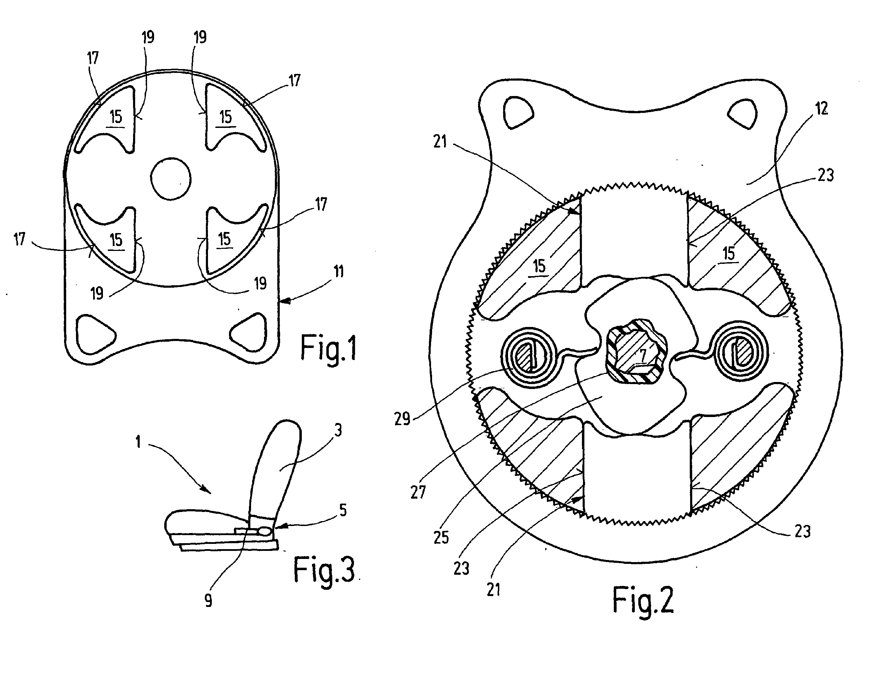

Im folgenden ist die Erfindung anhand dreier in der Zeichnung dargestellten Ausführungsbeispiele näher erläutert. Es zeigen
- Fig. 1: eine Ansicht eines Beschlagunterteils des ersten Ausführungsbeispiels,
- Fig. 2: einen Schnitt durch das erste Ausführungsbeispiel,
- Fig. 3: einen erfindungsgemäß ausgestatteten Fahrzeugsitz,

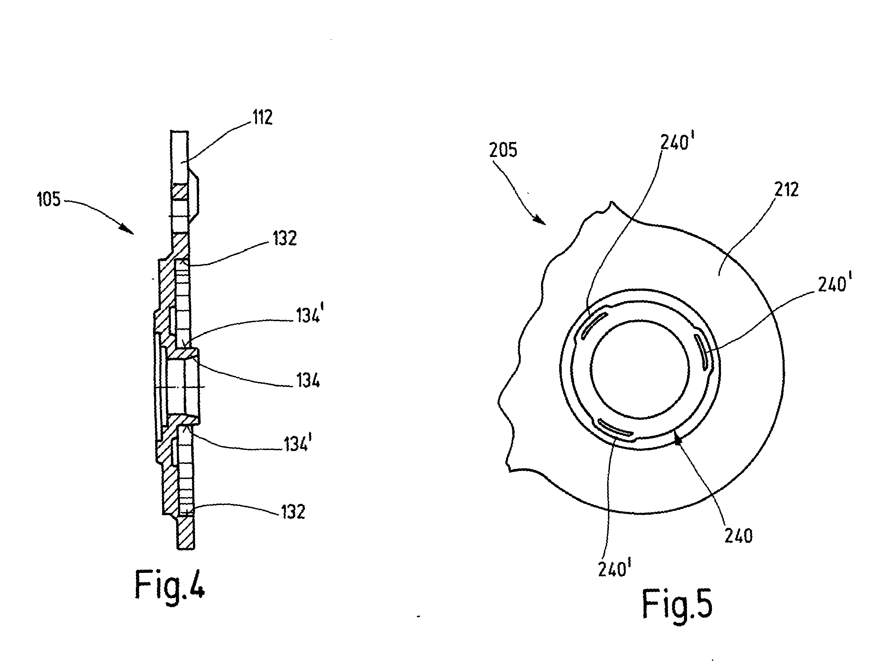

- Fig. 4: einen Schnitt durch ein Beschlagoberteil des zweiten Ausführungsbeispiels, und
- Fig. 5: eine Teilansicht eines dritten Ausführungsbeispiels im Bereich einer Lagerbuchse.

Im ersten Ausführungsbeispiel weist ein Fahrzeugsitz 1 für ein Kraftfahrzeug für die Neigungseinstellung seiner Rückenlehne 3 auf seinen beiden Seiten als Baugruppe je einen Beschlag 5 auf, der als Rastbeschlag ausgebildet ist. Die beiden Beschläge 5 stehen mittels einer Übertragungsstange 7 miteinander in Getriebeverbindung. Ein drehfest auf der Übertragungsstange 7 sitzender Handhebel 9 dient der manuellen Betätigung der Beschläge 5. Die nachfolgenden Richtungsangaben beziehen sich auf das durch die Übertragungsstange 7 definierte Zylinderkoordinatensystem.

Jeder Beschlag 5 weist als erstes Beschlagteil ein Beschlagunterteil 11 und als zweites Beschlagteil ein Beschlagoberteil 12 auf, welche durch nicht näher dargestellte Haltebleche in axialer Richtung zusammen gehalten werden. Am sitzteilfesten Beschlagunterteil 11 sind vier Führungs- und Lagersegmente 15 von näherungsweise viertelskreisförmigem Grundriß angeformt. Jedes Führungs- und Lagersegment 15 weist radial außen eine um das Zentrum des Beschlagunterteils 11 gekrümmte, schmale Lagerfläche 17 auf. Die vier Lagerflächen 17 bilden zusammen eine vierfach unterbrochene, zylindrisch geformte Anlagefläche für eine entsprechend gekrümmte, radial nach innen weisende Anlagefläche des als Hohlrad ausgebildeten lehnenfesten Beschlagoberteils 12. Jedes Führungs- und Lagersegment 15 weist ferner eine in radialer Richtung verlaufende, schmale, ebene Führungsfläche 19 auf. Je zwei Führungflächen 19 bilden zusammen eine radiale Führung für ein radial beweglich angeordnetes Zahnsegment 21.

Jedes Zahnsegment 21 trägt als Riegel auf einer radial weiter außen gelegenen Seite eine Vielzahl von Zähnen, welche mit entsprechenden Zähnen des Beschlagoberteils 12 auf dessen Lagerfläche zusammenwirken können, um den Beschlag 5 zu verriegeln. Zwei parallel zur radialen Richtung verlaufende Führungsseiten 23 liegen an den Führungsflächen 19 der zugehörigen zwei Führungs- und Lagersegmente 15 an. Die radial innen gelegene Seite des Zahnsegments 21 liegt an einer Exzenterscheibe 25 mit exzentrisch gekrümmten Spannflächen an. Die Exzenterscheibe 25 sitzt mittels eines buchsenförmigen Übertragungselementes 27 drehfest auf der Übertragungsstange 7 und ist durch zwei Spiralfedern 29 in Umfangsrichtung vorgespannt, um durch Druck auf die Zahnsegmente 21 den Beschlag 5 zu verriegeln. Eine der Übersichtlichkeit halber nicht dargestellte Mitnehmerscheibe, welche auch mittels des Übertragungselementes 27 drehfest auf der Übertragungsstange 7 sitzt und welche auf an sich bekannte Weise über Schlitz-Zapfen-Führungen mit den beiden Zahnsegmenten 21 zusammenwirkt, dient der Rückholung der Zahnsegmente 21 in radialer Richtung nach innen, also der Entriegelung, welche durch eine Drehung der Übertragungsstange 7 mittels des Handhebels 9 eingeleitet wird.

Die vier Führungs- und Lagersegmente 15 sind im Bereich ihrer Lagerflächen 17 und ihrer Führungsflächen 19 einschließlich jeweils eines schmalen benachbarten Bereichs lokal gehärtet, während die übrigen Bereiche sowie das Beschlagunterteil 11 ungehärtet sind, also weich bleiben. Die mit diesen Flächen zusammenwirkenden Flächen, also die Innenverzahnung des Beschlagoberteils 12 und die Führungsseiten 23 der Zahnsegmente 21, können auch gehärtet sein. Die Härtung erfolgt durch einen Laser. Dieses Verfahren mit einer gezielten, lokalen Wärmeeinbringung und Eigenabschreckung führt nur zu einem geringen Bauteilverzug. Zugleich wird der Verschleiß dieser Stützflächen bei häufiger Beanspruchung stark reduziert, und es können höhere Flächenpressungen aufgenommen werden.

Im zweiten Ausführungsbeispiel weist ein Beschlag 105 ein Beschlagoberteil 112 auf, welches als Hohlrad ausgebildet ist. Hierfür weist das Beschlagoberteil 112 an der Umfangsfläche einer napfförmigen Vertiefung eine radial nach innen weisende Verzahnung 132 auf. Die Zahnflanken und Zahnköpfe der Verzahnung 132 sind lasergehärtet. Das Beschlagoberteil 112 weist ferner in seinem Zentrum einen als Lager dienenden Kragenzug 134 auf, dessen Mantelaußenfläche 134' ebenfalls lasergehärtet ist.

Das dritte Ausführungsbeispiel betrifft einen Taumelbeschlag 205 mit aufgesetzter, zentraler Freischwenkung, welche zwischen einem Beschlagoberteil 212 und den das Getriebe aufweisenden Teilen des Taumelbeschlags 205 wirkt. Für diese Funktion ist in der Lagerstelle des Beschlagoberteils 212 eine Lagerbuchse 240 vorgesehen, welche auf ihrer radial nach außen weisenden Umfangsfläche drei zueinander versetzte, radial leicht vorspringende Bereiche 240' aufweist, die lasergehärtet sind.

Soweit nicht näher ausgeführt, stimmen die Ausführungsbeispiel überein oder sind in an sich bekannter Weise ausgebildet.

### Bezugszeichenliste

- 1: Fahrzeugsitz
- 3: Rückenlehne
- 5, 105, 205: Beschlag
- 7: Übertragungsstange
- 9: Handhebel
- 11: erstes Beschlagteil, Beschlagunterteil
- 12, 112, 212: zweites Beschlagteil, Beschlagoberteil
- 15: Führungs- und Lagersegment
- 17: Lagerfläche
- 19: Führungsfläche
- 21: Riegel, Zahnsegment
- 23: Führungsseite
- 25: Exzenter, Exzenterscheibe
- 27: Übertragungselement
- 29: Spiralfeder
- 132: Verzahnung
- 134: Kragenzug
- 134': Außenmantelfläche des Kragenzugs
- 240: Lagerbuchse
- 240': Bereich der Lagerbuchse

## Patentansprüche

1. Baugruppe für einen Fahrzeugsitz, insbesondere Beschlag für einen Kraftfahrzeugsitz, mit einem ersten Bauteil (11; 112; 240) und mit einem relativ zum ersten Bauteil (11; 112; 240) beweglichen zweiten Bauteil (12, 21; 212), welches mittels Bereichen (15, 17, 19; 134; 240'), die dem ersten Bauteil (11; 112; 240) zugeordnet sind, bezüglich des ersten Bauteils (11; 112; 240) gelagert, geführt, und/oder abgestützt ist oder anderweitig mit diesem zusammenwirkt, **dadurch gekennzeichnet, daß** das erste Bauteil (11; 112; 240) wenigstens teilweise gehärtet ist.

2. Baugruppe nach Anspruch 1, **dadurch gekennzeichnet, daß** das erste Bauteil (11; 112; 240) im Bereich von Flächen (15, 17, 19; 132, 134', 240'), welche ein Lager (15, 17; 134; 240'), eine Führung (15, 19), eine Verzahnung (132) oder eine sonstige Stützfläche für das zweite Bauteil (12, 21; 212) bilden, wenigstens teilweise gehärtet ist.

3. Baugruppe nach Anspruch 1 oder 2, **dadurch gekennzeichnet, daß** das erste Bauteil (11; 112; 240) in den wenigstens teilweise gehärteten Bereichen (15, 17, 19; 132, 134; 240) lokal gehärtet und im übrigen ungehärtet ist.

4. Baugruppe nach einem der Ansprüche 1 bis 3, **dadurch gekennzeichnet, daß** das zweite Bauteil (12, 21; 212) in den mit dem ersten Bauteil (11; 112; 240) zusammenwirkenden Bereichen wenigstens teilweise gehärtet ist.

5. Baugruppe nach einem der Ansprüche 1 bis 4, **dadurch gekennzeichnet, daß** der Beschlag (5; 105; 205) zwei relativ zueinander verdrehbare Beschlagteile (11, 12; 112) aufweist, wobei das am ersten Beschlagteil (11; 112) vorgesehene Lager (15, 17; 134; 240) für das zweite Beschlagteil (12; 212) gehärtet ist.

6. Baugruppe nach einem der Ansprüche 1 bis 5, **dadurch gekennzeichnet, daß** der Beschlag (5; 105) als Rastbeschlag mit zwei relativ zueinander verdrehbaren Beschlagteilen (11, 12; 112) und mit wenigstens einem Riegel (21) ausgebildet ist, der in einer Führung (15, 19) des ersten Beschlagteils (11) in radialer Richtung beweglich angeordnet ist und zum Verriegeln mit dem zweiten Beschlagteil (12) zusammenwirkt, wobei die am ersten Beschlagteil vorgesehene Führung (15, 19) für den Riegel (21) gehärtet ist.

7. Baugruppe nach einem der Ansprüche 1 bis 6, **dadurch gekennzeichnet, daß** der Beschlag (105) einen Zahnteil (132) aufweist, dessen Zahnflanken und/oder Zahnköpfe gehärtet sind.

8. Baugruppe nach einem der Ansprüche 1 bis 7, **dadurch gekennzeichnet, daß** der Beschlag (205) zwei unter Zwischenlage einer Lagerbuchse (240) relativ zueinander verdrehbare Beschlagteile (212) aufweist, wobei die Lagerbuchse (240) wenigstens teilweise gehärtet ist.

9. Baugruppe nach einem der Ansprüche 1 bis 8, **dadurch gekennzeichnet, daß** die gehärteten Bereiche (15, 17, 19; 132, 134'; 240') lasergehärtet sind.

10. Fahrzeugsitz (1) mit einer Rückenlehne (3), **gekennzeichnet durch** eine als Beschlag (5; 105; 205) ausgebildete Baugruppe nach einem der Ansprüche 1 bis 9 zur Neigungseinstellung der Rückenlehne (3).

## Claims

1. A subassembly for a vehicle seat, in particular fitting for a motor vehicle seat, having a first component (11; 112; 240) and having a second component (12, 21; 212) which is movable relative to the first component (11; 112; 240) and, by means of regions (15, 17, 19; 134; 240') which are assigned to the first component (11; 112; 240) is mounted, guided and/or supported with respect to the first component (11; 112; 240) or interacts therewith in another manner, **characterized in that** the first component (11; 112; 240) is at least partially hardened.

2. The subassembly as claimed in claim 1 **characterized in that** the first component (11; 112; 240) is at least partially hardened in the region of surfaces (15, 17, 19; 132, 134', 240') which form a bearing (15, 17; 134; 240'), a guide (15, 19), a toothing (132) or another supporting surface for the second component (12, 21; 212).

3. The subassembly as claimed in claim 1 or 2, **characterized in that** the first component (11; 112; 240) is hardened locally in the at least partially hardened regions (15, 17, 19; 132, 134; 240) and is otherwise unhardened.

4. The subassembly as claimed in one of claims 1 to 3, **characterized in that** the second component (12, 21; 212) is at least partially hardened in the regions interacting with the first component (11; 112; 240).

5. The subassembly as claimed in one of claims 1 to 4, **characterized in that** the fitting (5; 105; 205) has two fitting parts (11, 12; 112) which can be rotated relative to each other, the bearing (15, 17; 134; 240) provided on the first fitting part (11; 112) and intended for the second fitting part (12; 212) being hardened.

6. The subassembly as claimed in one of claims 1 to 5, **characterized in that** the fitting (5; 105) is designed as a latching fitting having two fitting parts (11, .12; 112) which can be rotated relative to each other, and having at least one latch (21) which is arranged movably in the radial direction in a guide (15, 19) of the first fitting part (11) and interacts with the second fitting part (12) for locking purposes, the guide (15, 19) which is provided on the first fitting part and is intended for the latch (21) being hardened.

7. The subassembly as claimed in one of claims 1 to 6, **characterized in that** the fitting (105) has a tooth part (132), the tooth flanks and/or heads of which are hardened.

8. The subassembly as claimed in one of claims 1 to 7, **characterized in that** the fitting (205) has two fitting parts (212) which can be rotated relative to each other with the interposition of a bearing bushing (240), the bearing bushing (240) being partially hardened.

9. The subassembly as claimed in one of claims 1 to 8, **characterized in that** the hardened regions (15, 17, 19; 132, 134'; 240') are laser hardened.

10. A vehicle seat (1) having a backrest (3), **characterized by** a subassembly as claimed in one of claims 1 to 9 which is designed as a fitting (5; 105; 205) and is intended for the adjustment of the inclination of the backrest (3).

## Revendications

1. Ensemble pour un siège de véhicule, notamment ferrure pour un siège de véhicule automobile, avec un premier élément (11 ; 112 ; 240) et avec un deuxième élément (12, 21 ; 212) qui est mobile par rapport au premier élément (11 ; 112 ; 240) et qui, au moyen de régions (15, 17, 19 ; 134 ; 240') qui sont associées au premier élément (11 ; 112 ; 240), est monté, guidé et/ou soutenu par rapport au premier élément (11 ; 112 ; 240) ou coopère d'une autre manière avec celui-ci,
**caractérisé en ce que** le premier élément (11 ; 112 ; 240) est au moins partiellement trempé.

2. Ensemble selon la revendication 1, **caractérisé en ce que** le premier élément (11 ; 112 ; 240) est au moins partiellement trempé dans la région de surfaces (15, 17, 19 ; 132, 134', 240') qui forment un palier (15, 17 ; 134 ; 240'), un guide (15, 19), une denture (132) ou une autre surface de soutien pour le deuxième élément (12, 21 ; 212).

3. Ensemble selon la revendication 1 ou 2, **caractérisé en ce que** le premier élément (11 ; 112 ; 240) est localement trempé dans les régions au moins partiellement trempées (15, 17, 19 ; 132, 134 ; 240), et ailleurs n'est pas trempé.

4. Ensemble selon l'une des revendications 1 à 3, **caractérisé en ce que** le deuxième élément (12, 21 ; 212) est au moins partiellement trempé dans les régions coopérant avec le premier élément (11 ; 112 ; 240).

5. Ensemble selon l'une des revendications 1 à 4, **caractérisé en ce que** la ferrure (5 ; 105 ; 205) présente deux parties de ferrure (11, 12 ; 112) rotatives l'une par rapport à l'autre, le palier (15, 17 ; 134 ; 240) pour le deuxième élément (12 ; 212) qui est prévu sur le premier élément (11 ; 112) étant trempé.

6. Ensemble selon l'une des revendications 1 à 5, **caractérisé en ce que** la ferrure (5 ; 105) est conçue comme ferrure à enclenchement avec deux parties de ferrure (11, 12 ; 112) rotatives l'une par rapport à l'autre et avec au moins un élément de verrouillage (21) qui est disposé mobile en direction radiale dans un guide (15, 19) de la première partie de ferrure (11) et qui coopère avec la deuxième partie de ferrure (12) pour le verrouillage, le guide (15, 19) pour l'élément de verrouillage (21) qui est prévu sur la première partie de ferrure étant trempé.

7. Ensemble selon l'une des revendications 1 à 6, **caractérisé en ce que** la ferrure (105) présente une partie dentée (132) dont les flancs de dents et/ou les têtes de dents sont trempés.

8. Ensemble selon l'une des revendications 1 à 7, **caractérisé en ce que** la ferrure (205) présente deux parties de ferrure (212) rotatives l'une par rapport à l'autre avec intercalation d'un coussinet (240), le coussinet (240) étant au moins partiellement trempé.

9. Ensemble selon l'une des revendications 1 à 8, **caractérisé en ce que** les régions trempées (15, 17, 19 ; 132, 134' ; 240') sont trempées au laser.

10. Siège de véhicule (1) avec un dossier (3), **caractérisé par** un ensemble réalisé sous forme de ferrure (5 ; 105 ; 205) selon l'une des revendications 1 à 9 pour le réglage de l'inclinaison du dossier (3).
